# EUROPEAN PATENT APPLICATION

(11) **EP 4 844 941 A2**
(43) Date of publication of application: **25.11.2026**
(21) Application number: 26177946.6
(22) Date of filing: 11.05.2026
(51) Int. Cl.: H01M 50/609, H01M 50/618, H01M 50/627

(54) **ELECTROLYTE FILLING SYSTEMS FOR ENERGY STORAGE DEVICES**

(30) Priority: 20.05.2025 US 202519213886
(71) Applicant: Tesla, Inc., Austin, TX 78725 (US)
(72) Inventor: VONG, Kin Nam, Austin, 78725 (US); LIU, Zhihui, Austin, 78725 (US); RESCHKE, Birger, Austin, 78725 (US)
(74) Representative: Zacco Sweden AB

(57) **Abstract**

Generally described, one or more aspects of the present disclosure relate to methods, systems, and devices related to a device for filling an energy storage device with an electrolyte, the device including a fill head defining a chamber, a gas inlet including a first valve, an atmospheric vent including a duct coupled to a second valve, a vacuum inlet including a third valve, a fill port, a nozzle positioned at an end of the chamber, and a dynamic plunger including a dynamic seal configured to dynamically seal against a circumferential surface of the chamber.

## Description

### INCORPORATION BY REFERENCE TO ANY PRIORITY APPLICATIONS

This application claims the benefit of priority to U.S. Patent Application No. 19/213,886, entitled "ELECTROLYTE FILLING SYSTEMS FOR ENERGY STORAGE DEVICES," filed on May 20, 2026, which is hereby incorporated by reference in its entirety and for all purposes.

### BACKGROUND

### Field

The present disclosure relates to manufacturing of energy storage devices. More specifically, the present disclosure relates to devices, systems, and methods for filling an energy storage device with an electrolyte.

### Description of the Related Art

Energy storage devices can include electrodes and other components placed within a housing. The energy storage device can be filled with an electrolyte. It can be difficult and time consuming to fill the energy storage device with an electrolyte due to the constraints of the components within the housing. Therefore, high pressures may be required to inject the electrolyte into the energy storage device. Additionally, air pockets or voids can form between the electrodes and other components of the energy storage device which can be difficult to remove while the electrolyte is being injected. The voids can increase the time and force required to fill the energy storage device. The voids may cause inadequate amounts of electrolyte being injected into the energy storage device, which can result in reduced energy storage device performance.

Accordingly, there is a need for improvements for filling energy storage devices with electrolytes.

### SUMMARY

For purposes of summarizing the embodiments and the advantages achieved over the prior art, certain objects and advantages of the embodiments are described herein. Not all such objects or advantages may be achieved in any particular embodiment of the invention. Thus, for example, those skilled in the art will recognize that the design may be embodied or carried out in a manner that achieves or optimizes one advantage or group of advantages as taught herein without necessarily achieving other objects or advantages as may be taught or suggested herein.

In some aspects, a dynamic plunger device for filling an energy storage device with an electrolyte is described. The device includes a plunger casing comprising a circumferential seal configured to dynamic seal against a chamber, a poppet received within the plunger casing, the poppet including: a shutoff surface configured to seal against a surface of the chamber and inhibit flow through a nozzle of the chamber when the dynamic plunger device is in a down position, a poppet seal configured to seal the poppet against the plunger casing and inhibit fluid flow through a first flow channel of the dynamic plunger device when a downward force is applied to the dynamic plunger device, and a release poppet disposed in the poppet, and a spring positioned against the release poppet.

In some embodiments, the release poppet is configured such that applying a first force which exceeds a force limit to the release poppet opens a second flow channel between the poppet and the release poppet. In some embodiments, applying a second force less than the force limit to the release poppet does not open the second flow channel. In some embodiments, the force limit is greater than 50 PSI. In some embodiments, the dynamic plunger device further includes a release poppet seal wherein the release poppet seal is configured to seal the release poppet against the poppet, closing the second flow channel. In some embodiments, the poppet seal is configured such that applying an upward force to the dynamic plunger device opens the first flow channel between the poppet and the plunger casing.

In some aspects, a device for filling an energy storage device with an electrolyte is described. The device includes a dynamic plunger device as described herein, a fill head defining the chamber, a gas inlet comprising a first valve fluidically connected to the chamber, an atmospheric vent comprising a duct coupled to a second valve fluidically connected to the chamber, a vacuum inlet comprising a third valve fluidically connected to the chamber, a fill port fluidically connected to the chamber, and the nozzle positioned at an end of the chamber and configured to connect to the energy storage device.

In some aspects, a method for filling an energy storage device with an electrolyte is described. The method includes the steps of connecting the energy storage device to a nozzle of a chamber, the chamber connected to a high pressure source via a first valve, to a free atmosphere vent via a second valve, and to a vacuum source via a third valve, separating an upper portion of the chamber from a lower portion of the chamber with a plunger, the lower portion in communication with the nozzle, opening the second valve, dispensing the electrolyte into the upper portion of the chamber through a fill port so that the electrolyte fills a portion of the upper portion of the chamber, raising the plunger, lowering the plunger to push a portion of the electrolyte into the energy storage device, opening the second valve, and disconnecting the energy storage device from the nozzle.

In some embodiments, the method further includes opening the third valve to create a vacuum in the chamber and the energy storage device. In some embodiments, the method further includes opening the second valve to bring the chamber to atmospheric pressure. In some embodiments, the method further includes opening the first valve to push another portion of the electrolyte into the energy storage device.

In some aspects a device for filling an energy storage device with an electrolyte is described. The device includes, a fill head defining a chamber, a gas inlet comprising a first valve fluidically connected to the chamber, an atmospheric vent comprising a duct coupled to a second valve fluidically connected to the chamber, a vacuum inlet comprising a third valve fluidically connected to the chamber, a fill port fluidically connected to the chamber, a nozzle positioned at an end of the chamber, and a dynamic plunger comprising a dynamic seal configured to dynamically seal against a circumferential surface of the chamber.

In some embodiments, the dynamic seal comprises an O-ring. In some embodiments, the chamber comprises a side sealing portion and a chamfered portion. In some embodiments, the dynamic seal seals against the side sealing portion of the chamber. In some embodiments, a surface of the dynamic plunger seals against the chamfered portion of the chamber. In some embodiments, the dynamic plunger comprises a plunger casing and a poppet received within the plunger casing. In some embodiments, the dynamic plunger is configured such that in a down position, the poppet is positioned against the plunger casing to form a seal. In some embodiments, the dynamic plunger is configured such that in an up position, the poppet is spaced apart from the plunger casing to open a flow channel. In some embodiments, the dynamic plunger further comprises a release poppet received within the poppet and configured to open a second flow channel if the downward pressure on the poppet exceeds a force limit.

### BRIEF DESCRIPTION OF THE DRAWINGS

The present embodiments are described with reference to the accompanying drawings, in which like reference characters reference like elements, and wherein:
FIG. 1 is a schematic diagram illustrating a filling device according to some embodiments.
FIGS. 2A-2D are schematic diagrams illustrating a filling device in different operational modes according to some embodiments.
FIG. 3 is a schematic illustration of a cross section of a plunger according to some embodiments.
FIGS. 4A-4C are schematic diagrams illustrating a plunger in different operational modes according to some embodiments.
FIG. 5 is a flow chart illustrating a method of filling an energy storage device according to some embodiments.

### DETAILED DESCRIPTION

The following detailed description of certain embodiments presents various descriptions of specific embodiments. However, the innovations described herein can be embodied in a multitude of different ways, for example, as defined and covered by the claims. In this description, reference is made to the drawings where like reference numerals and/or terms can indicate identical or functionally similar elements. It will be understood that elements illustrated in the figures are not necessarily drawn to scale. Moreover, it will be understood that certain embodiments can include more elements than illustrated in a drawing and/or a subset of the elements illustrated in a drawing. Further, some embodiments can incorporate any suitable combination of features from two or more drawings. The headings are provided for convenience only and do not impact the scope or meaning of the claims.

Generally described, one or more aspects of the present disclosure relate to systems, methods, and devices for filling an energy storage device with electrolyte, thereby reducing fill time and/or increasing the consistency of fill volume. Advantageously, reducing fill time and/or increasing the consistency of fill volume can reduce manufacturing time for energy storage devices and can improve energy storage device performance.

An energy storage device can include an electrode assembly disposed in a housing. The housing can then be filled with an electrolyte. The electrode assembly can include a cathode, an anode, and a separator positioned between the anode and cathode. In some embodiments, the electrode assembly is a wound electrode (i.e., rolled electrode) assembly (e.g., a jelly roll). Small voids are often formed between the housing and the electrode assembly and within the electrode assembly itself. These voids can be full of gas. If the gas is not removed from the housing as it is filled with electrolyte, then the energy storage device will contain less electrolyte. The reduced electrolyte volume can result in sub-optimal performance of the energy storage device. Energy storage devices and electrode films made using dry processing may be especially difficult to fill, for example because of the use of PTFE or other dry processed binders. Dry process electrode films can be dense and/or not porous electrode films which can be difficult to fill. Additionally, tightly wound jellyrolls, for example those made using dry processing, may be especially difficult to adequately fill with electrolyte.

During the electrolyte filling process, the air in the voids can be drawn out by applying a vacuum to the housing, then filling the electrolyte against atmospheric pressure. Advantageously, this can increase the volume of electrolyte in the energy storage device and improve the performance of the resulting energy storage device. However, utilizing a vacuum to draw gas out of the voids can be time consuming.

This process can be further improved by generating a vacuum on the housing, allowing electrolyte to be suctioned into the energy storage device with the electrolyte source open to the atmosphere so that any voids filled with gas may be drawn out of the energy storage device, and applying pressure to the electrolyte to inject more electrolyte into the system. These steps can be repeated in various orders to remove the gases from the voids and fully fill the energy storage device with electrolyte.

For some filling operations, the pressure applied to the electrolyte to inject the electrolyte into the system can be applied by adding high pressure gas to a closed volume which can apply pressure to the electrolyte. However, for some filling operations, it can be difficult to generate enough pressure on the electrolyte using high pressure gas. Therefore, in some filling operations, it can be advantageous to apply pressure to the electrolyte using a dynamically sealing plunger. Advantageously, the dynamically sealing plunger can generate higher pressures on the electrolyte than can be applied using high pressure gas. The dynamically sealing plunger can advantageously exert pressure which removes gas from the voids. By applying higher pressures with a dynamically sealing plunger, an energy storage device can be more quickly and/or more thoroughly filled with electrolyte. Additionally, the dynamically sealing plunger can generate high pressures on the electrolyte without the complex gas line systems required for high pressure gas systems. Advantageously, the dynamically sealing plunger can have a smaller footprint and/or require simplified maintenance in comparison to high pressure gas systems.

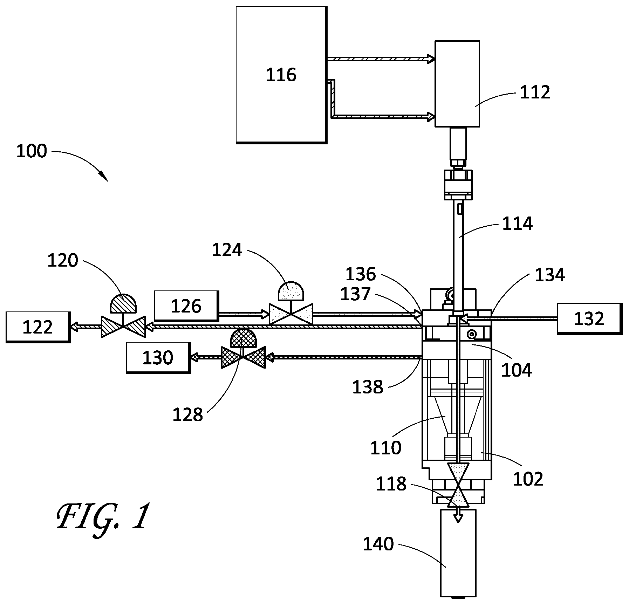

FIG. 1 illustrates a schematic diagram of a filling device 100 according to some embodiments. The filling device 100 can be used to fill an energy storage device 140 with an electrolyte. The filling device 100 includes a fill head 102 which defines a chamber 110, a plunger 114 and a manifold 104, where the manifold 104 includes a gas inlet 136, an atmospheric vent 138, a vacuum inlet 137, and a fill port 134. The chamber 110 includes a nozzle 118 positioned at one end of the chamber 110. The energy storage device 140 attaches to the fill head 102 at the nozzle 118. The manifold 104 is fluidically connected to the chamber 110. The manifold 104 is positioned at a second end of the chamber 110 opposite from the nozzle 118.

The gas inlet 136 is fluidically connected to a first valve 124. The first valve 124 is fluidically connected to a gas source 126. The first valve 124 can be operated to open, close, and control a flow of gas into the chamber 110 through the manifold 104.

The atmospheric vent 138 includes a duct connected to a second valve 128. The second valve 128 is fluidically connected to the atmosphere 130. The second valve 128 can be operated to open and close. To bring the chamber 110 to atmospheric pressure, the second valve 128 is opened. To pressurize and/or vacuum the chamber 110, the second valve 128 is closed.

The vacuum inlet 137 is fluidically connected to a third valve 120. The third valve 120 is fluidically connected to a vacuum 122. The third valve 120 can be operated to open and close. Opening the third valve 120 will generate a vacuum in the chamber 110. Closing the third valve 120 inhibits the vacuum 122 from suctioning gas out of the chamber 110.

The fill port 134 is fluidically connected to a fill source 132. A fluid, for example an electrolyte, can be provided from the fill source 132 to the chamber 110. The chamber 110 can be filled with the fluid provided from the fill source 132.

The plunger 114 connects to a plunger actuator 112 which is controlled by a controller 116. The plunger 114 extends through the chamber 110. The plunger actuator 112 actuates the plunger 114 up and down. In a down position, the plunger 114 separates an upper portion of the chamber 110 from a lower portion of the chamber 110. In the down position, the plunger 114 seals the nozzle 118 from the rest of the chamber 110. In an up position, the plunger 114 does not separate the upper portion of the chamber 110 from the lower portion of the chamber 110. In the up position, the chamber 110 is one continuous volume.

The plunger actuator can supply a prescribed force to the plunger. The plunger actuator can move the plunger at a prescribed rate. In some embodiments, the plunger actuator can supply a force of, of about, or of at least about 40 PSI, 60 PSI, 80 PSI, 100 PSI, 120 PSI, 140 PSI, 160 PSI, 180 PSI, 200 PSI, 220 PSI, 240 PSI, 260 PSI, 280 PSI, 300 PSI, or any range of values therebetween. In some embodiments, the plunger actuator can move the plunger at a rate, of about, or of at least about 10 mm/s, 20 mm/s, 30 mm/s, 40 mm/s, 50 mm/s, 60 mm/s, 70 mm/s, 80 mm/s, 90 mm/s, 100 mm/s, 110 mm/s, 120 mm/s, 130 mm/s, 140 mm/s, 150 mm/s or more, or any range of values therebetween.

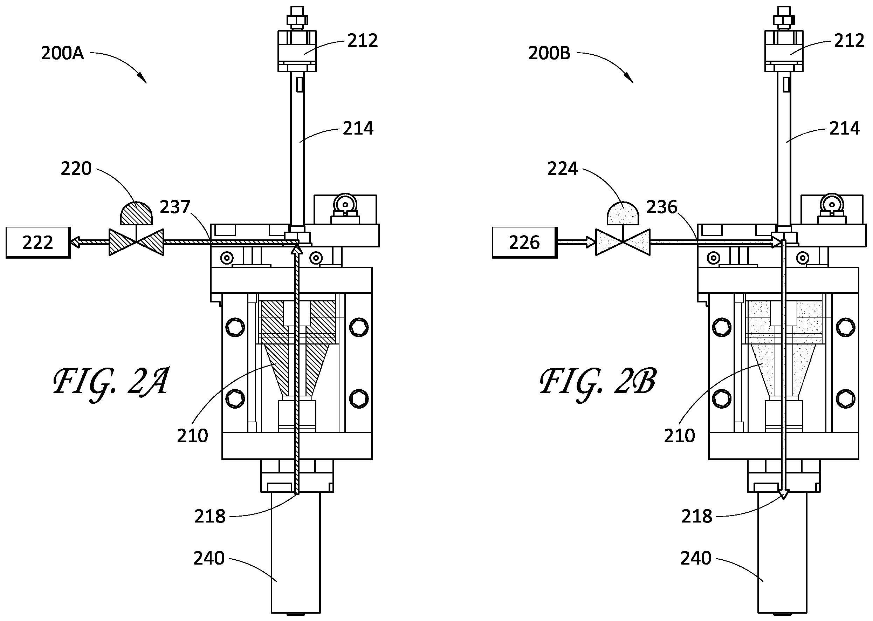

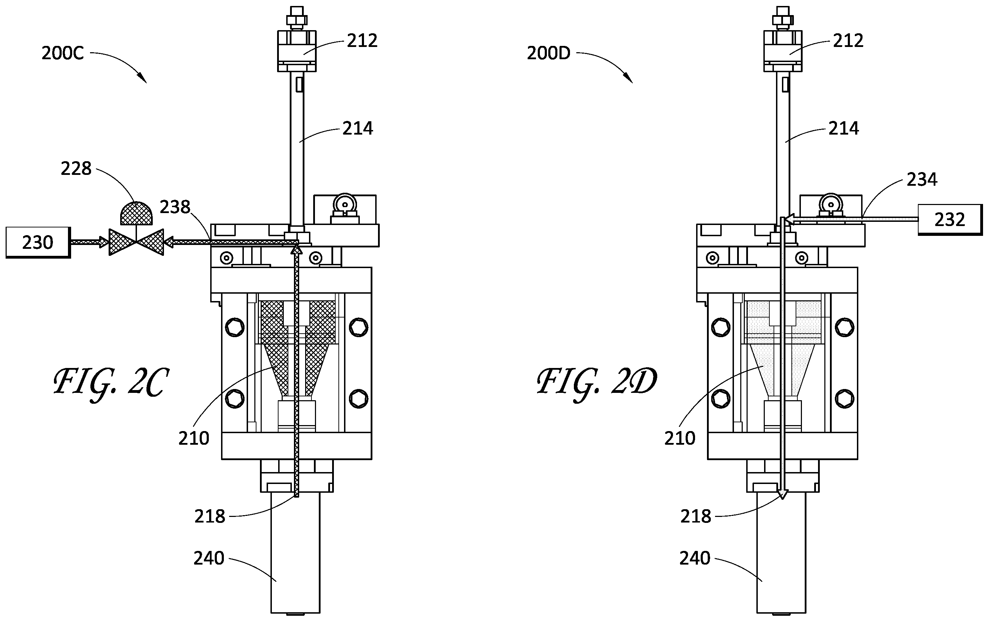

FIGS. 2A-2D illustrate a single filling device 200 in various configurations, according to some embodiments. Depending on the positions of the valves and plunger, the filling device 200 can perform various functions. FIG. 2A illustrates the filling device 200A configured to perform a vacuum function. FIG. 2B illustrates the filling device 200B configured to perform a gas pressurization function. FIG. 2C illustrates the filling device 200C configured to perform a vent function. FIG. 2D illustrates the filling device 200D configured to perform a chamber filling function.

FIG. 2A illustrates a filling device 200A including a chamber 210, a plunger 214, a plunger actuator 212, a vacuum inlet 237, a vacuum 222, and a third valve 220. An energy storage device 240 is attached to the chamber 210 by a nozzle 218. As illustrated in FIG. 2A, the filling device 200A is configured to perform a vacuum function. The vacuum inlet 237 is fluidically connected to the chamber 210 and the vacuum 222. The third valve 220 is positioned between the vacuum inlet 237 and the vacuum 222. The plunger 214 is in an up position and the third valve 220 is open. With the plunger 214 in the up position, the nozzle 218 creates a fluidic connection between an upper portion of the chamber 210 and the energy storage device 240. With the third valve 220 open, the vacuum inlet 237 creates a fluidic connection between the vacuum 222 and the chamber 210. The vacuum 222 is fluidically connected to both the chamber 210 and the energy storage device 240.

With the third valve 220 open and the vacuum 222 fluidically connected to both the chamber and the energy storage device 240, the vacuum 222 can pull the air out of the energy storage device 240 and draw any voids out of the energy storage device 240. Additionally, the vacuum 222 can generate a vacuum pressure in the energy storage device 240.

FIG. 2B illustrates a filling device 200B including a chamber 210, a plunger 214, a plunger actuator 212, a gas inlet 236, a gas source 226, and a first valve 224. An energy storage device 240 is attached to the chamber 210 by a nozzle 218. As illustrated in FIG. 2B, the filling device 200B is configured to perform a gas pressure function. The gas inlet 236 is fluidically connected to the chamber 210 and the gas source 226. The first valve 224 is positioned between the gas inlet 236 and the gas source 226. The plunger 214 is in an up position and the first valve 224 is open. With the plunger 214 in the up position, the nozzle 218 creates a fluidic connection between an upper portion of the chamber 210 and the energy storage device 240. With the first valve 224 open, the gas inlet 236 creates a fluidic connection between the gas source 226 and the chamber 210. The gas source 226 is fluidically connected to both the chamber 210 and the energy storage device 240.

With the first valve 224 open and the gas source 226 fluidically connected to both the chamber 210 and the energy storage device 240, the gas source 226 can pressurize the chamber 210 and fluid, for example electrolyte, in the chamber 210. Pressurizing the chamber 210 can increase the pressure differential between the energy storage device 240 and the chamber 210, thereby applying pressure to the fluid to inject more fluid into the energy storage device 240.

FIG. 2C illustrates a filling device 200C including a chamber 210, a plunger 214, a plunger actuator 212, an atmospheric vent 238, a connection to the atmosphere 230, and a second valve 228. An energy storage device 240 is attached to the chamber 210 by a nozzle 218. As illustrated in FIG. 2C, the filling device 200C is configured to perform a vent function. The atmospheric vent 238 is fluidically connected to the chamber 210 and the atmosphere 230. The second valve 228 is positioned between the atmospheric vent 238 and the atmosphere 230. The plunger 214 is in an up position and the second valve 228 is open. With the plunger 214 in the up position, the nozzle 218 creates a fluidic connection between an upper portion of the chamber 210 and the energy storage device 240. With the second valve 228 open, the atmospheric vent 238 creates a fluidic connection between the atmosphere 230 and the chamber 210. The atmosphere 230 is fluidically connected to both the chamber 210 and the energy storage device 240.

With the second valve 228 open and the atmospheric vent 238 fluidically connected to the chamber 210 with the plunger 214 in an up position, the atmospheric vent 238 can equalize the pressure between the atmosphere 230, the chamber 210, and the energy storage device 240. With the second valve 228 open and the atmospheric vent 238 fluidically connected to the chamber 210 with the plunger 214 in a down position, the atmospheric vent 238 can create a pressure differential between the chamber 210 and the energy storage device 240. The pressure differential between the energy storage device 240 and the chamber 210 can apply pressure to the fluid in the chamber 210 and inject more fluid into the energy storage device 240.

FIG. 2D illustrates a filling device 200D including a chamber 210, a plunger 214, a plunger actuator 212, a fill port 234 and, a fill source 232. An energy storage device 240 is attached to the chamber 210 by a nozzle 218. As illustrated in FIG. 2D, the filling device 200D is configured to perform a fill function. The fill source 232 is fluidically connected to the chamber 210 and the atmosphere 230. A fluid, for example an electrolyte, flows from the fill source 232 into the chamber 210.

In some embodiments, the fluid is pre-metered by the fill source such that a prescribed quantity of the fluid flows from the fill source into the chamber. In some embodiments, the fluid is time-metered, volume-metered, or mass-metered to define the prescribed quantity. In some embodiments, the fluid is provided from a fixed volume source. In some embodiments, the fluid is provided from a continuous source. In some embodiments, the fill source includes a manual shut off. In some embodiments, the fill source includes an automatic shut off. In some embodiments, the fill source is a manual feed of the fluid into the chamber. In some embodiments, the fill source is a cylinder fluid fill into the chamber.

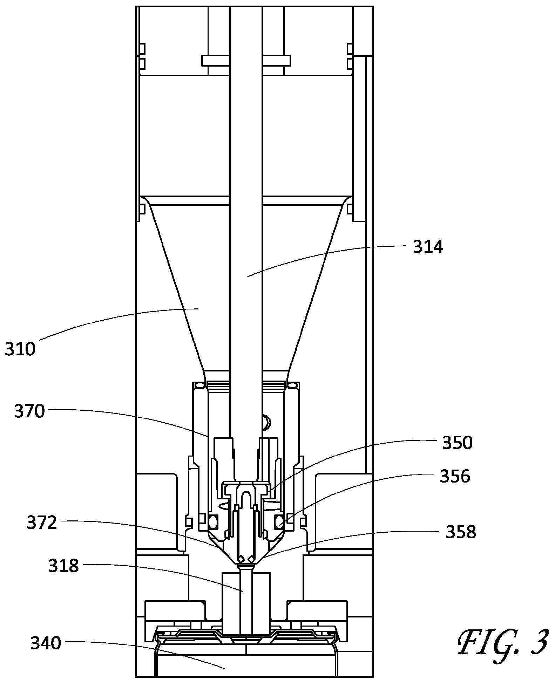

FIG. 3 illustrates a detailed cross-sectional view of a plunger 314 in a chamber 310. As illustrated, the plunger 314 is positioned in a down position in the chamber 310. The chamber 310 includes a side sealing portion 370, a chamfered portion 372, and a nozzle 318. The nozzle 318 is attached to an energy storage device 340. The side sealing portion 370 is cylindrical. The side sealing portion 370 includes a smooth circumferential surface. The side sealing portion 370 is positioned above the chamfered portion 372. The nozzle 318 is positioned below the chamfered portion 372. The nozzle 318 is cylindrical. The nozzle 318 has a smaller diameter than the side sealing portion 370. The chamfered portion 372 is a conical section having an upper diameter that is substantially the same as the side sealing portion 370 and a lower diameter that is substantially the same as the nozzle 318. The side sealing portion 370 is concentric to the chamfered portion 372 and the nozzle 318. The chamfered portion 372 forms a transition between the side sealing portion 370 and the nozzle 318.

The plunger 314 includes a dynamic plunger device 350. The dynamic plunger device 350 includes a shutoff surface 358 and a dynamic seal 356. The dynamic plunger device 350 is generally cylindrical in shape. The dynamic plunger device 350 has a diameter substantially the same as the diameter of the side sealing portion 370. The dynamic plunger device 350 includes a chamfer around the bottom circumference of the dynamic plunger device 350. The chamfer defines the shutoff surface 358. The shutoff surface 358 contacts the chamfered portion 372 in the down position. The shutoff surface 358 is complementary to the chamfered portion 372 such that a surface-to-surface contact is formed. The shutoff surface 358 seals the chamber 310 apart from the nozzle 318 when the plunger 314 is in the down position. The shutoff surface 358 inhibits fluid in the chamber 310 from entering the nozzle 318 when the plunger 314 is in the down position. Above the shutoff surface 358, the dynamic seal 356 is positioned around the circumference of the dynamic plunger device 350. The dynamic seal 356 is an O-ring. The dynamic seal 356 can seal against the side sealing portion 370. The dynamic seal 356 forms a dynamic seal against the side sealing portion 370 while the plunger 314 is in motion. The dynamic seal 356 seals a lower portion of the side sealing portion 370 apart from an upper portion of the side sealing portion 370. The dynamic seal 356 allows for the dynamic plunger device 350 to generate pressure on fluid in the side sealing portion 370, thereby pushing the fluid in the side sealing portion 370 out of the nozzle 318 and injecting the fluid into the energy storage device 340.

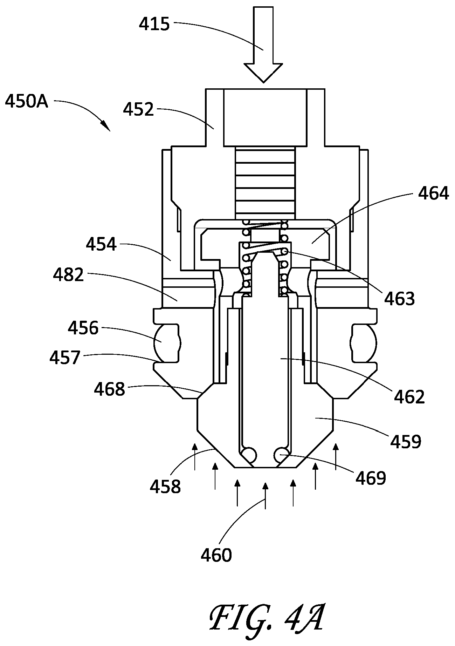

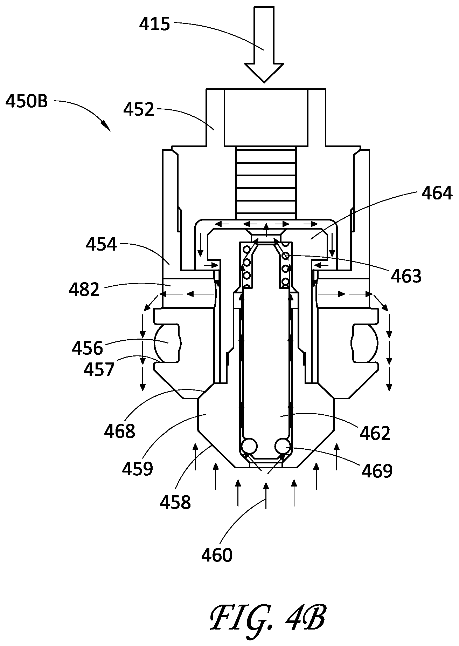

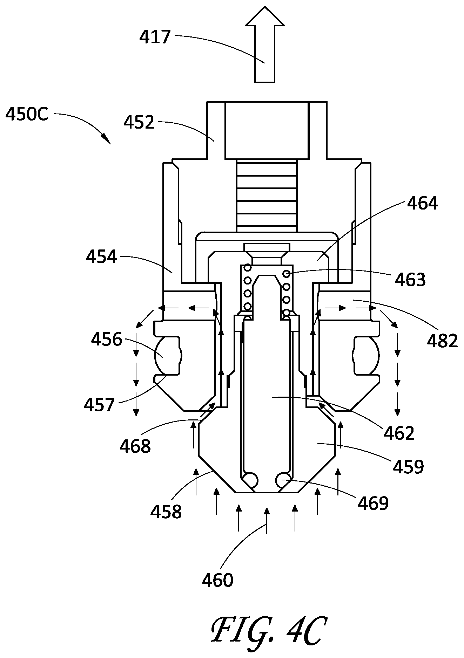

FIGS. 4A-4C illustrate a dynamic plunger device 450 in various configurations, according to some embodiments. Depending on the positions of the plunger and the pressure of fluid against the plunger interface, the dynamic plunger device 450 can perform various functions. FIG. 4A illustrates the dynamic plunger device 450A configured to apply pressure to fluid. FIG. 4B illustrates the dynamic plunger device 450B when the pressure applied to the fluid exceeds a limit. FIG. 4C illustrates the dynamic plunger device 450C when the dynamic plunger device 450C is released from applying pressure to the fluid.

The dynamic plunger device 450 includes a float valve end cap 452, a plunger casing 454, a dynamic seal 456, a float valve case 464, a spring 463, a poppet 459, and a release poppet 462. The plunger casing 454 is generally cylindrical. The plunger casing 454 includes a circumferential groove 457 positioned around the circumference of the plunger casing 454. The dynamic seal 456 is positioned in the circumferential groove 457. The dynamic seal 456 is a circumferential seal configured to dynamically seal against a chamber. A release channel 482 is positioned above the circumferential groove 457 in the plunger casing 454. The float valve end cap 452, float valve case 464, spring 463, poppet 459, and release poppet 462 are nested in the plunger casing 454. The poppet 459 is received within the plunger casing 454. The poppet 459 includes a shutoff surface 458 configured to seal against a surface of the chamber and inhibit fluid flow through the nozzle, when the dynamic plunger device 450 is in a down position. The release poppet 462 is received within a channel in the poppet 459. The float valve case 464 is positioned over the release poppet 462. An upper end of the release poppet 462 and the poppet 459 are received in the float valve case 464. The spring 463 is positioned between the float valve case 464 and the release poppet 462. The float valve end cap 452 is positioned above the float valve case 464.

As illustrated in FIG. 4A, a force 415 is applied downward on the dynamic plunger device 450A which causes a fluid 460 to press against the shutoff surface 458. The poppet 459 forms a poppet seal 468 against the plunger casing 454. The poppet seal 468 inhibits fluid flow through the dynamic plunger device 450A. The poppet seal 468 inhibits the fluid 460 from passing through a first flow channel between the poppet 459 and the plunger casing 454. The release poppet 462 seals against the interior of the poppet 459 with a release poppet seal 469. The spring 463 is preloaded such that the force of the fluid 460 does not release the release poppet seal 469. The release poppet seal 469 inhibits the fluid from passing through a second flow channel between the poppet 459 and the release poppet 462.

In some embodiments, the dynamic plunger device can apply force to the fluid, thereby supply pressure to the fluid. In some examples, the dynamic plunger device can apply a force of, of about, or of at least about 40 PSI, 50 PSI, 60 PSI, 70 PSI, 80 PSI, 90 PSI, 100 PSI, 110 PSI, 120 PSI, 130 PSI, 140 PSI, 150 PSI, 160 PSI, 170 PSI, 180 PSI, 190 PSI, 200 PSI, 210 PSI, 220 PSI, 230 PSI, 240 PSI, 250 PSI, 260 PSI, 270 PSI, 280 PSI, 290 PSI, 300 PSI, or any range of values therebetween.

As illustrated in FIG. 4B, a force 415 is applied downward on the dynamic plunger device 450B which causes a fluid 460 to press against the shutoff surface 458. The poppet 459 forms a poppet seal 468 against the plunger casing 454. The poppet seal 468 inhibits the fluid 460 from passing through a first flow channel between the poppet 459 and the plunger casing 454. The release poppet 462 is configured to open a second flow channel through the dynamic plunger device 450B if the pressure applied to the dynamic plunger device 450B exceeds a pressure limit. The poppet seal 468 fixes the poppet 459 in place and the release poppet 462 is supported by the spring 463. The force of the fluid 460 against the release poppet 462 is transferred to the spring 463. As illustrated in FIG. 4B, the force of the fluid 460 exceeds the pre-load force (e.g., a pressure limit) of the spring 463 and the spring 463 is compressed. The compressed spring 463 allows the release poppet 462 to move upward and opens the release poppet seal 469. The release of the release poppet seal 469 allows the fluid 460 to passing through a second flow channel between the poppet 459 and the release poppet 462. The second flow channel extends between the poppet 459 and the release poppet 462, past the spring 463, through the float valve case 464, between the float valve case 464 and the plunger casing 454, and out through the release channel 482. The second flow channel allows the pressure below the dynamic seal 456 to decrease until the force of the fluid 460 is below the spring pre-load force (e.g., the pressure limit) such that the release poppet seal 469 seals, thereby closing the second flow channel.

Advantageously, the poppet seal does not require an O-ring to form a seal, thereby simplifying the design of the dynamic plunger device and reducing the risk of components coming loose during operation. In some embodiments, the poppet seal forms a hermetic seal. In some embodiments, the poppet seal forms a water and/or liquid tight seal.

Advantageously, the pre-load force (e.g., pressure limit) of the spring defines the pressure required to open the release poppet seal. The release poppet seal can advantageously operate as a relief mechanism so that the energy storage device is not over pressurized. Including both a poppet seal and a release poppet seal allows the dynamic plunger device to mechanically push fluid into an energy storage device while ensuring that the energy storage device is not over pressurized by the mechanical pressure applied by the dynamic plunger.

In some embodiments, the dynamic plunger device can apply force to the fluid that exceeds the pressure limit, thereby exceeding the pre-load force and opening the second flow channel. In some examples, the pressure limit can be, be about, or be at least about 40 PSI, 50 PSI, 60 PSI, 70 PSI, 80 PSI, 90 PSI, 100 PSI, 110 PSI, 120 PSI, 130 PSI, 140 PSI, 150 PSI, 160 PSI, 170 PSI, 180 PSI, 190 PSI, 200 PSI, 210 PSI, 220 PSI, 230 PSI, 240 PSI, 250 PSI, 260 PSI, 270 PSI, 280 PSI, 290 PSI, 300 PSI, or any range of values therebetween.

As illustrated in FIG. 4C, a force 417 is applied upward on the dynamic plunger device 450C so that the dynamic plunger device 450C is released. The arrangement as illustrated in FIG. 4C would occur for example when lifting the dynamic plunger device 450C. The poppet 459 and float valve case 464 are fixedly attached to one another and can float within the plunger casing 454 when an upward force 417 is applied to the dynamic plunger device 450C. The pressure differential between the force 417 and the fluid 460 can cause the poppet 459 to release from against the plunger casing 454 and space the poppet 459 apart from the plunger casing 454. The float valve case 464 contacts a lip of the plunger casing 454, thereby limiting the distance the poppet 459 can be spaced apart from the plunger casing 454. The release of the poppet 459 from against the plunger casing 454 opens a first flow channel between the poppet 459 and the plunger casing 454. The first flow channel extends between the poppet 459 and the plunger casing 454 and out through the release channel 482. The first flow channel allows the pressure above and below the dynamic seal 456 (e.g., the force 417 and the fluid 460) to equalize.

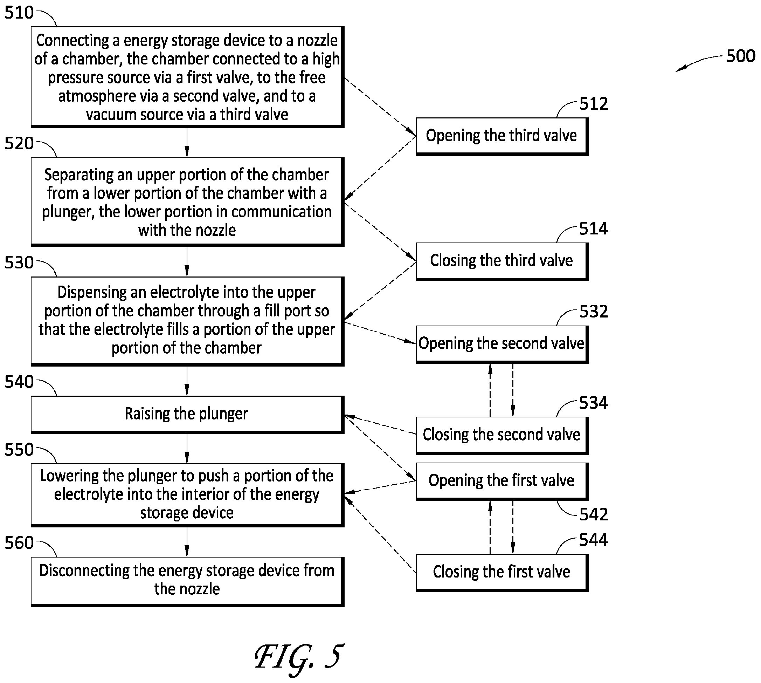

Advantageously, due to the float of the poppet and float valve case, minimal, or zero pre-load force is required to open the first flow channel when an upward force is applied to the dynamic plunger device. The lack of pre-load force required prevents the upward movement of the dynamic plunger device from generating a vacuum (e.g., a negative pressure differential) above the energy storage device. Advantageously, this allows the dynamic plunger device to move upward without drawing fluid (e.g., electrolyte) out of the energy storage device and back into the chamber. FIG. 5 a flow chart illustrating a method of filling an energy storage device according to some embodiments. At step 510, the method includes connecting an energy storage device to a nozzle of a chamber, the chamber connected to a high pressure source via a first valve, to the free atmosphere via a second valve, and to a vacuum source via a third valve. At step 520, the method includes separating an upper portion of the chamber from a lower portion of the chamber with a plunger, the lower portion in communication with the nozzle. At step 530, the method includes dispensing an electrolyte into the upper portion of the chamber through a fill port so that the electrolyte fills a portion of the upper portion of the chamber. At step 540, the method includes raising the plunger. At step 550, the method includes lowering the plunger to push a portion of the electrolyte into the interior of the energy storage device. At step 560, the method includes disconnecting the energy storage device from the nozzle.

In some embodiments, steps 540 and 550 can be repeated 1, 2, 3, 4, 5, 6, 7, 8, 9, 10 or more times, or any range therebetween. In some embodiments, at optional step 512 between steps 510 and 520, the method includes opening the third valve, which can create a vacuum in the chamber and the energy storage device. In some embodiments, at optional step 514 between steps 520 and 530, the method includes closing the third valve. In some embodiments, at step optional 532 between steps 530 and 540, the method includes opening the second valve, which can bring the chamber to atmospheric pressure. In some embodiments, at optional step 534 between steps 532 and 540, the method includes closing the second valve. In some embodiments, at optional step 542 between steps 540 and 550, the method includes opening the first valve, which can generate a high pressure in the chamber. In some embodiments, optional step 542 can occur with the plunger raised. In some embodiments, optional step 542 can occur with the plunger lowered. In some examples, when the first valve is opened, the high pressure in the chamber can push a portion of the electrolyte into the interior of the energy storage device. In some embodiments, at optional step 544 between steps 540 and 550, the method includes closing the first valve. In some embodiments, steps 532, 534, 542 and/or 544 can be repeated 1, 2, 3, 4, 5, 6, 7, 8, 9, 10 or more times, or any range therebetween.

### Electrode Materials, Electrode Films, Electrodes and Energy Storage Devices

The devices, systems and methods herein may be utilized to fill an energy storage device with an electrolyte. An active material (e.g., cathode active material, anode active material) may be used in the preparation of an electrode film and/or electrode for an energy storage device. In some embodiments, an electrode comprises a current collector and an electrode film.

In some embodiments, the active material is a cathode active material. In some embodiments, the cathode active material is selected from at least one of a metal oxide, metal sulfide, a sulfur-carbon composite, a lithium metal oxide, and a material including sulfur. In some embodiments, the cathode active material is selected from lithium iron phosphate (i.e., LiFePO₄ or "LFP"), lithium manganese iron phosphate (e.g., LiMn_{0.6}Fe_{0.4}PO₄ or "LMFP"), lithium nickel manganese cobalt oxide (i.e., LiNiₓMn_{y}Co_{1-x-y}O₂ or "NMC"), lithium nickel cobalt aluminum oxide (i.e., LiNiₓCo_{y}Al_{z}O₂ or "NCA"), lithium manganese oxide ("LMO"), lithium nickel manganese oxide ("LNMO"), lithium cobalt oxide ("LCO"), lithium titanate ("LTO"), or combinations thereof. In some embodiments, the cathode active material includes at least two of LFP, LMFP, NMC, NCA, LMO, LNMO, LCO, LTO, and combinations thereof. In some embodiments, the cathode active material is an iron phosphate-based active material. In some embodiments, iron phosphate-based active materials include LiFePO₄ (i.e., "lithium iron phosphate" and "LFP") and LiMn₁₋ₓFeₓPO₄ (i.e., "lithium manganese iron phosphate" and "LMFP") (e.g., LiMn_{0.6}Fe_{0.4}PO₄ or LiMn_{0.8}Fe_{0.2}PO₄). In some embodiments, the iron phosphate-based active material includes LFP. In some embodiments, the iron phosphate-based active material includes an LMFP. In some embodiments, the iron phosphate-based active material includes an LFP and/or an LMFP.

In some embodiments, the active material is an anode active material. In some embodiments, anode active materials can include, for example, an insertion material (such as carbon, graphite, and/or graphene), an alloying/dealloying material (such as silicon, silicon oxide, tin, and/or tin oxide), a metal alloy or compound (such as Si-Al, and/or Si-Sn), and/or a conversion material (such as manganese oxide, molybdenum oxide, nickel oxide, and/or copper oxide). The anode active materials can be used alone or mixed together to form multi-phase materials (such as Si-C, Sn-C, SiOx-C, SnOx-C, Si-Sn, Si-SiOx, Sn-SnOx, Si-SiOx-C, Sn-SnOx-C, Si-Sn-C, SiOx-SnOx-C, Si-SiOx-Sn, or Sn-SiOx-SnOx.). Anode active materials include common natural graphite, synthetic or artificial graphite, surface modified graphite, spherical-shaped graphite, flake-shaped graphite and blends or combinations of these types of graphite, metallic elements and their compounds as well as metal-C composite for the anode.

In some embodiments, the electrode film comprises the active material in an amount of, of about, of at least, or at least about, 70 wt.%, 75 wt.%, 80 wt.%, 85 wt.%, 86 wt.%, 87 wt.%, 88 wt.%, 89 wt.%, 90 wt.%, 91 wt.%, 92 wt.%, 93 wt.%, 94 wt.%, 95 wt.%, 96 wt.%, 97 wt.%, 98 wt.%, 98.5 wt.%, 99 wt.%, 99.5 wt.%, 99.8 wt.% or 99.9 wt.%, or any range of values therebetween.

In some embodiments, an electrode film comprises a carbon material configured to reversibly intercalate lithium ions. In some embodiments, the lithium intercalating carbon is selected from a graphitic carbon, graphite, hard carbon, soft carbon and combinations thereof. For example, the electrode film of the electrode can include a binder material, one or more of graphitic carbon, graphite, graphene-containing carbon, hard carbon and soft carbon, and an electrical conductivity promoting material. In some embodiments, an electrode is mixed with lithium metal and/or lithium ions. In some embodiments, the electrode comprises the carbon material in a total amount of, of about, of at most, or at most about, 20 wt.%, 15 wt.%, 10 wt.%, 9 wt.%, 8 wt.%, 7 wt.%, 6 wt.%, 5 wt.%, 4 wt.%, 3 wt.%, 2 wt.%, 1 wt.%, or any range of values therebetween.

In some embodiments, an electrode film includes a conductive additive. In some embodiments, the conductive additive may comprise a conductive carbon additive, such as a carbon black. In some embodiments, the conductive additive may comprise a conductive carbon additive. In some embodiments, the conductive carbon additive comprises carbon black, carbon nanotubes, such as single-walled carbon nanotubes (SWCNTs) and multi-walled carbon nanotubes (MWCNTs). In some embodiments, the electrode film comprises the conductive additive in a total amount of, of about, of at most, or at most about, 10 wt.%, 9 wt.%, 8 wt.%, 7 wt.%, 6 wt.%, 5 wt.%, 4 wt.%, 3 wt.%, 2 wt.%, 1 wt.%, 0.5 wt.%, 0.25 wt.%, 0.1 wt.%, or any range of values therebetween. In some embodiments, each of the conductive additive is in an amount of, of about, of at most, or at most about, 10 wt.%, 9 wt.%, 8 wt.%, 7 wt.%, 6 wt.%, 5 wt.%, 4 wt.%, 3 wt.%, 2 wt.%, 1 wt.%, 0.5 wt.%, 0.25 wt.%, 0.1 wt.%, of the electrode film, or any range of values therebetween. In some embodiments, the conductive additive is carbon black.

In some embodiments, the electrode film includes a binder. As discussed above, the use of dry processed binders, for example, PTF, may make filling an energy storage device with electrolyte more difficult. In some embodiments, binders can include polytetrafluoroethylene (PTFE), a polyolefin, polyalkylenes, polyethers, styrene-butadiene, co-polymers of polysiloxanes and polysiloxane, branched polyethers, polyvinylethers, a carboxymethylcellulose (CMC), co-polymers thereof, and/or combinations thereof. In some embodiments, the polyolefin can include polyethylene (PE), polypropylene (PP), polyvinylidene fluoride (PVDF), co-polymers thereof, and/or combinations thereof. For example, the binder can include polyvinylene chloride, poly(phenylene oxide) (PPO), polyethylene-block-poly(ethylene glycol), poly(ethylene oxide) (PEO), poly(phenylene oxide) (PPO), polyethylene-block-poly(ethylene glycol), polydimethylsiloxane (PDMS), polydimethylsiloxane-coalkylmethylsiloxane, co-polymers thereof, and/or combinations thereof. In some embodiments, the binder may include a thermoplastic. In some embodiments, the binder comprises a fibrillizable and/or fibrillized polymer. In certain embodiments, the binder comprises, consists essentially, or consists of a single fibrillizable and/or fibrillized binder, such as PTFE. In some embodiments, the electrode film includes, includes about, includes at most, or includes at most about, 1 wt.%, 2 wt.%, 3 wt.%, 4 wt.%, 5 wt.%, 6 wt.%, 7 wt.%, 8 wt.%, 9 wt.%, 10 wt.%, or any range of values therebetween, of a binder.

In some embodiments, the electrode film can be a wet processed electrode film. In some embodiments, the electrode film is prepared by a wet or slurry-based electrode fabrication process. In some embodiments, the electrode film of the present disclosure can be a dry processed electrode film. In some embodiments, the electrode film is prepared by a dry electrode fabrication process. As discussed above, energy storage devices using electrode films made using dry processing may be especially difficult to fill with electrolyte. Dry process electrode films can be dense and/or not porous electrode films which can be difficult to fill. As used herein, a dry electrode fabrication process can refer to a process in which no or substantially no solvents are used to form a dry electrode film. For example, components of the active layer or electrode film, including carbon materials and binders, may comprise, consist of, or consist essentially of dry particles. The dry particles for forming the active layer or electrode film may be combined to provide a dry particle active layer mixture. In some embodiments, the active layer or electrode film may be formed from the dry particle active layer mixture such that weight percentages of the components of the active layer or electrode film and weight percentages of the components of the dry particle active layer mixture are substantially the same. In some embodiments, the active layer or electrode film formed from the dry particle active layer mixture using the dry fabrication process may be free from, or substantially free from, any processing additives such as solvents and solvent residues resulting therefrom. In some embodiments, the resulting active layer or electrode films are self-supporting films formed using the dry process from the dry particle mixture. In some embodiments, the resulting active layer or electrode films are free-standing films formed using the dry process from the dry particle mixture. A process for forming an active layer or electrode film can include fibrillizing the fibrillizable binder component(s) such that the film comprises fibrillized binder. In further embodiments, a free-standing active layer or electrode film may be formed in the absence of a current collector. In still further embodiments, an active layer or electrode film may comprise a fibrillized polymer matrix such that the film is self-supporting. It is thought that a matrix, lattice, or web of fibrils can be formed to provide mechanical structure to the electrode film.

In some embodiments, an electrode film is disposed on a current collector to form an electrode. In some embodiments, a current collector can include a metallic material, such as a material comprising aluminum, nickel, copper, combinations of the foregoing. In some embodiments, a current collector comprises a pure metal. In some embodiments, a current collector comprises a metallized polymer film or metal coated polymer film. In some embodiments, the polymer comprises polyethylene terephthalate (PET), biaxially oriented polypropylene (BOPP) or a combination thereof. In some embodiments, the metal coating comprises aluminum. In some embodiments, coating the final electrode film mixture comprises forming a uniform electrode film mixture coating. In some embodiments, the current collector comprises a thickness of, of about, of at most, or at most about, 200 µm, 100 µm, 50 µm, 40 µm, 30 µm, 20 µm, 15 µm, 10 µm, 5 µm, or any range of values therebetween.

In some embodiments, an electrode is a double-sided electrode. In some embodiments, the double-sided electrode includes two electrode films. In some embodiments, the double-sided electrode may include a current collector, a top electrode film, and a bottom electrode film. In some embodiments, each of the two electrode films can have any suitable shape, size and thickness.

In some embodiments, the energy storage device comprises a separator, an anode electrode, the cathode electrode, an electrolyte, and a housing, wherein the electrolyte, separator, anode electrode and cathode electrode are disposed within the housing and the separator is positioned between the anode and cathode electrodes. In some embodiments, an energy storage device is formed by placing an electrolyte, a separator, an anode electrode and the cathode electrode described herein within a housing, wherein the separator is placed between the anode electrode and the cathode electrode.

An electrode assembly includes a cathode, an anode, and a separator positioned between the anode and cathode. In some embodiments, the electrode assembly is a wound electrode (i.e., rolled electrode) assembly (e.g., a jellyroll). In some embodiments, the energy storage device is selected from the group consisting of a cylindrical energy storage device, a stacked prismatic energy storage device, and a spiral-wound prismatic energy storage device.

The electrode disclosed herein may be used for an energy storage device. In some embodiments, the energy storage device comprises a separator, an anode electrode, the cathode electrode, an electrolyte, and a housing, wherein the electrolyte, separator, anode electrode and cathode electrode are disposed within the housing and the separator is positioned between the anode and cathode electrodes. In some embodiments, an energy storage device is formed by placing an electrolyte, a separator, an anode electrode and the cathode electrode described herein within a housing, wherein the separator is placed between the anode electrode and the cathode electrode. In some embodiments, the energy storage device comprises an anode electrode positioned between two cathode electrodes. In some embodiments, the anode electrode and/or the cathode electrode comprises a shaped electrode film. In some embodiments, the energy storage device is a lithium-ion battery. In some embodiments, the energy storage devices may be a battery, capacitor, capacitor-battery hybrid, fuel cell, or combinations thereof. In some embodiments, the energy storage system or energy storage device may be used for electromobility. In some embodiments, the energy storage device may be used in motor vehicles, including hybrid electric vehicles (HEV), plug-in hybrid electric vehicles (PHEV), and/or electric vehicles (EV). In some embodiments, the energy storage device used in motor vehicles, including hybrid electric vehicles (HEV), plug-in hybrid electric vehicles (PHEV), and/or electric vehicles (EV) reduces greenhouse gas emissions.

In some embodiments, the energy storage device is charged with a suitable lithium-containing electrolyte, such as through the devices, systems and processes described herein. For example, the energy storage device can include a lithium salt, and a solvent, such as a non-aqueous or organic solvent. Generally, the lithium salt includes an anion that is redox stable. In some embodiments, the anion can be monovalent. In some embodiments, a lithium salt can be selected from lithium hexafluorophosphate (LiPF₆), lithium bis(trifluoromethanesulfonyl)imide (LiFSI), lithium tetrafluoroborate (LiBF₄), lithium perchlorate (LiClO₄), lithium bis(trifluoromethansulfonyl)imide (LiN(SO₂CF₃)₂), lithium trifluoromethansulfonate (LiSO₃CF₃), lithium bis(oxalato)borate (LiB(C₂O₄)₂), lithium bis(fluorosulfonyl)imide (LiN(SO₂F)₂, lithium difluoro(oxalato)borate (LiC₂BF₂O₄) and combinations thereof. In some embodiments, the electrolyte can include a quaternary ammonium cation and an anion selected from the group consisting of hexafluorophosphate, tetrafluoroborate and iodide. In some embodiments, the salt concentration can be about 0.1 mol/L (M) to about 5 M, about 0.2 M to about 3 M, or about 0.3 M to about 2 M. In further embodiments, the salt concentration of the electrolyte can be about 0.7 M to about 2 M. In certain embodiments, the salt concentration of the electrolyte can be about 0.2 M, about 0.3 M, about 0.4 M, about 0.5 M, about 0.6 M, about 0.7 M, about 0.8 M. about 0.9 M, about 1 M, about 1.1 M, about 1.2 M, 1.3M, 1.4M, 1.5M or values therebetween.

In some embodiments, an energy storage device can include a liquid solvent. The solvent need not dissolve every component, and need not completely dissolve any component, of the electrolyte. In further embodiments, the solvent can be an organic solvent. In some embodiments, a solvent can include one or more functional groups selected from dioxathiolane (e.g., 1,3,2-dioxathiolane-2,2-dioxide (i.e., "DTD")), carbonates, ethers and/or esters. In some embodiments, the solvent can comprise a carbonate. In further embodiments, the carbonate can be selected from cyclic carbonates such as, for example, ethylene carbonate (EC), propylene carbonate (PC), vinyl ethylene carbonate (VEC), vinylene carbonate (VC), fluoroethylene carbonate (FEC), and combinations thereof, or acyclic carbonates such as, for example, dimethyl carbonate (DMC), diethyl carbonate (DEC), ethyl methyl carbonate (EMC), and combinations thereof. In some embodiments, one or more solvents can be used at a concentration of, of about, of at least, or at least about, 30 wt. %, 35 wt. %, 40 wt. %, 45 wt. %, 50 wt. %, 55 wt. %, 60 wt. %, 65 wt. %, 70 wt. %, 75 wt. %, 80 wt. %, 85 wt. % or 90 wt. %, or any range of values therebetween. In some embodiments, solvents are utilized as additives in the electrolyte system, and can be used at a concentration of, of about, of at most, or at most about, 0.1 wt. %, 0.2 wt. %, 0.3 wt. %, 0.4 wt. %, 0.5 wt. %, 0.6 wt. %, 0.7 wt. %, 0.8 wt. %, 0.9 wt. %, 1 wt. %, 1.1 wt. %, 1.2 wt. %, 1.3 wt. %, 1.4 wt. %, 1.5 wt. %, 1.6 wt. %, 1.7 wt. %, 1.8 wt. %, 1.9 wt. %, 2 wt. %, 2.1 wt. %, 2.2 wt. %, 2.3 wt. %, 2.4 wt. %, 2.5 wt. %, 2.6 wt. %, 2.7 wt. %, 2.8 wt. %, 2.9 wt. %, 3 wt. %, 4 wt. %, 5 wt. %, 6 wt. %, 7 wt. %, 8 wt. %, 9 wt. % or 10 wt. %, or any range of values therebetween. For example, in some embodiments, the amount of an additive in the electrolyte is or is about in any one of the following ranges: 0.1-10 wt.%, 1-6 wt.%, 2-5 wt.%, 0.1-6 wt.%, 2-8 wt.%, 2-3 wt.%, or 1-4 wt.%.

In some embodiments, an energy storage device is created such that one electrode (e.g., anode) is larger than and overhangs the other electrode (e.g., cathode). One electrode may overhang the other in the winding direction and/or non-winding direction of the electrode assembly. Such electrode overhangs may avoid yield losses. In some embodiments where there is no, or is substantially no, overlap and/or intermingling of the separator and the shaped electrode film (e.g., cathode electrode film), the boundary of the shaped electrode film is easier to identify and therefore improves the ability to form a counter electrode (e.g., anode electrode) with an overhang.

In the foregoing specification, the disclosure has been described with reference to specific embodiments. However, as one skilled in the art will appreciate, various embodiments disclosed herein can be modified or otherwise implemented in various other ways without departing from the spirit and scope of the disclosure. Accordingly, this description is to be considered as illustrative and is for the purpose of teaching those skilled in the art the manner of making and using various embodiments of the disclosed battery system. It is to be understood that the forms of disclosure herein shown and described are to be taken as representative embodiments. Equivalent elements, or materials may be substituted for those representatively illustrated and described herein. Moreover, certain features of the disclosure may be utilized independently of the use of other features, all of which is apparent to one skilled in the art after having the benefit of this description of the disclosure. Expressions such as "including", "comprising", "incorporating", "consisting of, "have", "is" used to describe and claim the present disclosure are intended to be construed in a non-exclusive manner, namely allowing for items, components or elements not explicitly described also to be present. Reference to the singular is also to be construed to relate to the plural.

Further, various embodiments disclosed herein are to be taken in the illustrative and explanatory sense and should in no way be construed as limiting of the present disclosure. All joinder references (e.g., connected, associated, coupled, and the like) are only used to aid the reader's understanding of the present disclosure, and may not create limitations, particularly as to the position, orientation, or use of the elements disclosed herein. Therefore, joinder references, if any, are to be construed broadly. Moreover, such joinder references may not necessarily infer that two elements are directly connected to each other.

Additionally, all numerical terms, such as, but not limited to, "first", "second", "one", "another", or any other ordinary and/or numerical terms, should also be taken only as identifiers, to assist the reader's understanding of the various elements, embodiments, variations and/ or modifications of the present disclosure, and may not create any limitations, particularly as to the order, or preference, of any element, embodiment, variation and/or modification relative to, or over, another element, embodiment, variation and/or modification.

It will also be appreciated that one or more of the elements depicted in the drawings/figures can also be implemented in a more separated or integrated manner, or even removed in certain cases, as is useful in accordance with a particular application.

For expository purposes, the term "horizontal" as used herein is defined as a plane parallel to the plane or surface of the floor of the area in which the device being described is used or the method being described is performed, regardless of its orientation. The term "floor" can be interchanged with the term "ground." The term "vertical" refers to a direction perpendicular to the horizontal as just defined. Terms such as "above," "below," "bottom," "top," "side," "front," "rear," "lateral," "higher," "lower," "upper," "over," and "under," are defined with respect to the horizontal plane, in use.

The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list.

Although certain embodiments and examples have been described herein, it will be understood by those skilled in the art that many aspects of the systems shown and described in the present disclosure may be differently combined and/or modified to form still further embodiments or acceptable examples. All such modifications and variations are intended to be included herein within the scope of this disclosure. A wide variety of designs and approaches are possible. No feature, structure, or step disclosed herein is essential or indispensable.

For purposes of this disclosure, certain aspects, advantages, and novel features are described herein. It is to be understood that not necessarily all such advantages may be achieved in accordance with any particular embodiment. Thus, for example, those skilled in the art will recognize that the disclosure may be embodied or carried out in a manner that achieves one advantage or a group of advantages as taught herein without necessarily achieving other advantages as may be taught or suggested herein.

Moreover, while illustrative embodiments have been described herein, the scope of any and all embodiments having equivalent elements, modifications, omissions, combinations (e.g., of aspects across various embodiments), adaptations and/or alterations as would be appreciated by those in the art based on the present disclosure. The limitations in the claims are to be interpreted broadly based on the language employed in the claims and not limited to the examples described in the present specification or during the prosecution of the application, which examples are to be construed as non-exclusive. Further, the actions of the disclosed processes and methods may be modified in any manner, including by reordering actions and/or inserting additional actions and/or deleting actions. It is intended, therefore, that the specification and examples be considered as illustrative only, with a true scope and spirit being indicated by the claims and their full scope of equivalents.

Conditional language used herein, such as, among others, "can," "might," "may," "e.g.," and the like, unless specifically stated otherwise, or otherwise understood within the context as used, is generally intended to convey that some embodiments include, while other embodiments do not include, certain features, elements, and/or states. Thus, such conditional language is not generally intended to imply that features, elements, blocks, and/or states are in any way required for one or more embodiments or that one or more embodiments necessarily include logic for deciding, with or without author input or prompting, whether these features, elements and/or states are included or are to be performed in any particular embodiment.

The ranges disclosed herein also encompass any and all overlap, sub-ranges, and combinations thereof. Language such as "up to," "at least," "greater than," "less than," "between," and the like includes the number recited.

## Claims

1. A dynamic plunger device for filling an energy storage device with an electrolyte, the device comprising:
a plunger casing comprising a circumferential seal configured to dynamic seal against a chamber;
a poppet received within the plunger casing, the poppet comprising:
a shutoff surface configured to seal against a surface of the chamber and inhibit flow through a nozzle of the chamber when the dynamic plunger device is in a down position;
a poppet seal configured to seal the poppet against the plunger casing and inhibit fluid flow through a first flow channel of the dynamic plunger device when a downward force is applied to the dynamic plunger device; and
a release poppet disposed in the poppet; and
a spring positioned against the release poppet.

2. The dynamic plunger device of claim 1, wherein the release poppet is configured such that applying a first force which exceeds a force limit to the release poppet opens a second flow channel between the poppet and the release poppet.

3. The dynamic plunger device of claim 2, wherein applying a second force less than the force limit to the release poppet does not open the second flow channel, or
wherein the force limit is greater than 50 PSI.

4. The dynamic plunger device of claim 2, further comprising a release poppet seal wherein the release poppet seal is configured to seal the release poppet against the poppet, closing the second flow channel.

5. The dynamic plunger device of claim 1, wherein the poppet seal is configured such that applying an upward force to the dynamic plunger device opens the first flow channel between the poppet and the plunger casing.

6. A device for filling the energy storage device with the electrolyte, the device comprising:
the dynamic plunger device of claim 1;
a fill head defining the chamber;
a gas inlet comprising a first valve fluidically connected to the chamber;
an atmospheric vent comprising a duct coupled to a second valve fluidically connected to the chamber;
a vacuum inlet comprising a third valve fluidically connected to the chamber;
a fill port fluidically connected to the chamber; and
the nozzle positioned at an end of the chamber and configured to connect to the energy storage device.

7. A method for filling an energy storage device with an electrolyte, comprising the steps of:
connecting the energy storage device to a nozzle of a chamber, the chamber connected to a high pressure source via a first valve, to a free atmosphere vent via a second valve, and to a vacuum source via a third valve;
separating an upper portion of the chamber from a lower portion of the chamber with a plunger, the lower portion in communication with the nozzle;
opening the second valve;
dispensing the electrolyte into the upper portion of the chamber through a fill port so that the electrolyte fills a portion of the upper portion of the chamber;
raising the plunger;
lowering the plunger to push a portion of the electrolyte into the energy storage device;
opening the second valve; and
disconnecting the energy storage device from the nozzle.

8. The method of claim 7, further comprising opening the third valve to create a vacuum in the chamber and the energy storage device or
further comprising opening the second valve to bring the chamber to atmospheric pressure or
further comprising opening the first valve to push another portion of the electrolyte into the energy storage device.

9. A device for filling an energy storage device with an electrolyte, the device comprising:
a fill head defining a chamber;
a gas inlet comprising a first valve fluidically connected to the chamber;
an atmospheric vent comprising a duct coupled to a second valve fluidically connected to the chamber;
a vacuum inlet comprising a third valve fluidically connected to the chamber;
a fill port fluidically connected to the chamber;
a nozzle positioned at an end of the chamber; and
a dynamic plunger comprising a dynamic seal configured to dynamically seal against a circumferential surface of the chamber.

10. The device of claim 9, wherein the dynamic seal comprises an O-ring.

11. The device of claim 9, wherein the chamber comprises a side sealing portion and a chamfered portion.

12. The device of claim 11, wherein the dynamic seal seals against the side sealing portion of the chamber, wherein optionally a surface of the dynamic plunger seals against the chamfered portion of the chamber.

13. The device of claim 9, wherein the dynamic plunger comprises a plunger casing and a poppet received within the plunger casing.

14. The device of claim 13, wherein the dynamic plunger is configured such that in a down position, the poppet is positioned against the plunger casing to form a seal, wherein the dynamic plunger may be configured such that in an up position, the poppet is spaced apart from the plunger casing to open a flow channel.

15. The device of claim 13, wherein the dynamic plunger further comprises a release poppet received within the poppet and configured to open a second flow channel if a downward pressure on the poppet exceeds a force limit.
